# EUROPEAN PATENT APPLICATION

(11) **EP 2 637 449 A1**
(43) Date of publication of application: **11.09.2013**
(21) Application number: 11837950.2
(22) Date of filing: 28.10.2011
(51) Int. Cl.: H04W 36/14, H04W 8/22, H04W 36/38, H04W 76/06

(54) **MOBILE DEVICE, COMMUNICATION CONTROL DEVICE, AND HANDOVER CONTROL METHOD**

(30) Priority: 05.11.2010 JP 2010249079
(71) Applicant: NTT DOCOMO, Inc., Chiyoda-ku Tokyo 100-6150 (JP)
(72) Inventor: AOYAGI, Kenichiro, Tokyo 100-6150 (JP); MATSUTANI, Hideyuki, Tokyo 100-6150 (JP); SUGANO, Kiminobu, Tokyo 100-6150 (JP); NAKAMURA, Yuichiro, Tokyo 100-6150 (JP)
(74) Representative: HOFFMANN EITLE
(86) International application number: PCT/JP2011/074975
(87) International publication number: WO 2012/060300

(57) **Abstract**

The UE 300 includes a message reception unit 303 configured to receive a command that RAB 500a, RAB 500b established between the UE 300 and the first radio communication system be relocated at the second radio communication system or a command to replace a configuration of the RAB 500a, 500b when the UE 300 executes a handover from the first radio communication system to the second radio communication system, and a radio access bearer establishment unit 305 configured to release an undesignated radio access bearer not designated in the relocation command or the replacement command received by the message reception unit 303, if the undesignated radio access bearer is established.

## Description

### TECHNICAL FIELD

The present invention relates to a mobile device connectable to a first radio communication system and a second radio communication system different from the first radio communication system, a communication controller, and a handover control method.

### BACKGROUND ART

For a mobile device connectable to multiple radio communication systems using different radio access technologies (RAT) such as a 3G (Wideband-CDMA) system (hereinafter, a 3G) and a Long Term Evolution system (hereinafter, an LTE), various methods (Inter-RAT handover) of a handover between radio communication systems have been specified (e.g., Non-patent Document 1).

Inter-RAT PS HANDOVER, for example, includes: determining a radio access bearer (RAB) to be relocated on the 3G side from among one or more RABs established on the LTE side; creating RRC: HANDOVER TO UTRAN COMMAND; and sending the created COMMAND to the mobile device.

Meanwhile, Single Radio Voice Call Continuity (SR-VCC) includes: replacing a Voice over IP (VoIP) bearer with a circuit switching (CS) bearer; creating RRC: HANDOVER TO UTRAN COMMAND; and then sending the created COMMAND to the mobile device.

### PRIOR ART DOCUMENT

### NON-PATENT DOCUMENT

Non-patent Document 1: 3GPP TS 25.331, Technical Specification Group Radio Access Network; Radio Resource Control (RRC) ; Protocol specification Section 8.3.6 Inter-RAT handover to UTRAN

### SUMMARY OF THE INVENTION

In the above-described SR-VCC, the relocation of the RAB established on the LTE side and RAB replacement (of the VoIP bearer with the CS bearer) can be performed by using RRC: HANDOVER TO UTRAN COMMAND. However, in a case where there is a need to release any of the RABs established between the mobile device and the 3G side of a handover target, such as a case where the 3G side cannot reserve a necessary radio resource or does not support establishments of multiple RABs, RRC: RADIO BEARER RELEASE has to be transmitted in addition to the RRC: HANDOVER TO UTRAN COMMAND.

This transmission may cause problems of an increase in radio resource usage and a connection delay in the handover of the mobile device.

Thus, the present invention has been made in view of the foregoing situation. Accordingly, an objective of the invention is to provide a mobile device, a communication controller, and a handover control method that are capable of achieving the saving of radio resource usage and a reduction of a connection delay during the execution of a handover between radio communication systems with different radio access technologies which are used by the mobile device.

A first feature of the present invention is summarized as a mobile device (a UE 300) connectable to a first radio communication system (e.g., an LTE system 10) and a second radio communication system (e.g., a 3G system 20) different from the first radio communication system, the mobile device comprising a command reception unit (a message reception unit 303) configured to receive a command that a radio access bearer (RAB 500a, RAB 500b) established between the mobile device and the first radio communication system be relocated at the second radio communication system or a command to replace a configuration of the radio access bearer, when the mobile device executes a handover from the first radio communication system to the second radio communication system; and a radio access bearer establishment unit (a radio access bearer establishment unit 305) configured to release an undesignated radio access bearer (e.g., RAB 500b) not designated in the relocation command or the replacement command received by the command reception unit, if the undesignated radio access bearer is established.

In the above-described feature, the radio access bearer establishment unit may notify at least one of the first radio communication system and the second radio communication system of an information element indicating that the mobile device has an ability of releasing the undesignated radio access bearer.

A second feature of the invention is summarized as a communication controller (a RNC 210) to control a mobile device connectable to a first radio communication system and a second communication system different from the first radio communication system, the communication controller comprising an acquisition unit (an information element acquisition unit 211) configured to acquire an information element indicating that the mobile device has an ability of releasing an undesignated radio access bearer not designated in a command that a radio access bearer established between the mobile device and the first radio communication system be relocated at the second radio communication system or a command to replace a configuration of the radio access bearer, if the undesignated radio access bearer is established in the mobile device, when the mobile device executes a handover from the first radio communication system to the second radio communication system, and a message control unit (a message control unit 213) configured to cancel transmission of an release command to instruct a release of the undesignated radio access bearer if the information element is acquired by the acquisition unit.

A third feature of the invention is summarized as a communication controller (a RNC 210) to control a mobile device connectable to a first radio communication system and a second radio communication system different from the first radio communication system, the communication controller comprising an acquisition unit (an information element acquisition unit 121) configured to acquire an information element indicating that the mobile device has an ability of releasing an undesignated radio access bearer not designated in a command that a radio access bearer established between the mobile device and the first radio communication system be relocated at the second radio communication system or a command to replace a configuration of the radio access bearer, if the undesignated radio access bearer is established in the mobile device, when the mobile device executes a handover from the first radio communication system to the second radio communication system; and a message transfer unit (a message transfer unit 123) configured to transfer the information element acquired by the acquisition unit to another communication controller (a RNC 210) responsible for determining whether to cancel transmission of an release command to instruct a release of the undesignated radio access bearer to the mobile device.

A fourth feature of the invention is summarized as a communication controller (a RNC 210) including a handover control unit (a handover control unit 219) to control a handover of a mobile device connectable to a first radio communication system and a second radio communication system different from the first communication system, the communication controller comprising a command acquisition unit (a command acquisition unit 217) configured to acquire a command that a radio access bearer established between the mobile device and the first radio communication system be relocated at the second radio communication system or a command to replace a configuration of the radio access bearer when the mobile device executes a handover from the first radio communication system to the second radio communication system. If an undesignated radio access bearer not designated in the relocation command or the replacement command received by the command acquisition unit is established in the mobile device, the handover control unit sets an information element instructing a release of the undesignated radio access bearer, establishes a radio access bearer targeted by the relocation command or the replacement command between the mobile device and the second radio communication system, and releases the undesignated radio access bearer by using the set information element.

A fifth feature of the invention is summarized as a communication controller (an eNodeB 110) including a handover control unit (a handover control unit 113) to control a handover of a mobile device connectable to a first radio communication system and a second radio communication system different from the first radio communication system, the communication controller comprising a response reception unit (a response reception unit 111) configured to receive, from the mobile device, a response to a command that a radio access bearer established between the mobile device and the first radio communication system be relocated at the second radio communication system or a command to replace a configuration of the radio access bearer, when the mobile device executes a handover from the first radio communication system to the second radio communication system. If the response reception unit does not receive the response and if the undesignated radio access bearer is established in the mobile device, the handover control unit transmits a radio signal to instruct a release of an undesignated radio access bearer not designated in the relocation command or the replacement command.

A sixth feature of the present invention is summarized as a method of controlling a handover of a mobile device connectable to a first radio communication system and a second radio communication system different from the first radio communication system, the method comprising the steps of receiving a command that a radio access bearer established between the mobile device and the first radio communication system be relocated at the second radio communication system or a command to replace a configuration of the radio access bearer when the mobile device executes a handover from the first radio communication system to the second radio communication system; and releasing an undesignated radio access bearer not designated in the received relocation command or the replacement command if the undesignated radio access bearer is established.

### BRIEF DESCRIPTION OF DRAWING

[Fig. 1] Fig. 1 is an overall schematic configuration diagram of a radio communication system according to an embodiment of the invention.
[Fig. 2] Fig. 2 is a functional block configuration diagram of a UE 300 according to the embodiment of the invention.
[Fig. 3] Fig. 3 is a functional block configuration diagram of a RNC 210 according to the embodiment of the invention.
[Fig. 4] Fig. 4 is a functional block configuration diagram of an MME 120 according to the embodiment of the invention.
[Fig. 5] Fig. 5 is a drawing illustrating a communication sequence performed when the UE 300 according to the embodiment of the invention executes a handover from an LTE system 10 to a 3G system 20.
[Fig. 6] Fig. 6 is a functional block configuration diagram of an eNodeB 110 according to a modification of the invention.

### MODE FOR CARRYING OUT THE INVENTION

Hereinafter, an embodiment of the invention is described. Note that in the following description of the drawings, same or similar reference numerals denote same or similar portions. In addition, it should be noted that the drawings are schematic and ratios of dimensions and the like are different from actual ones.

Therefore, specific dimensions and the like should be determined in consideration of the following description. Moreover, the drawings naturally include portions having different dimensional relationships and ratios from each other.

### (1) Overall Schematic Configuration of Radio Communication System

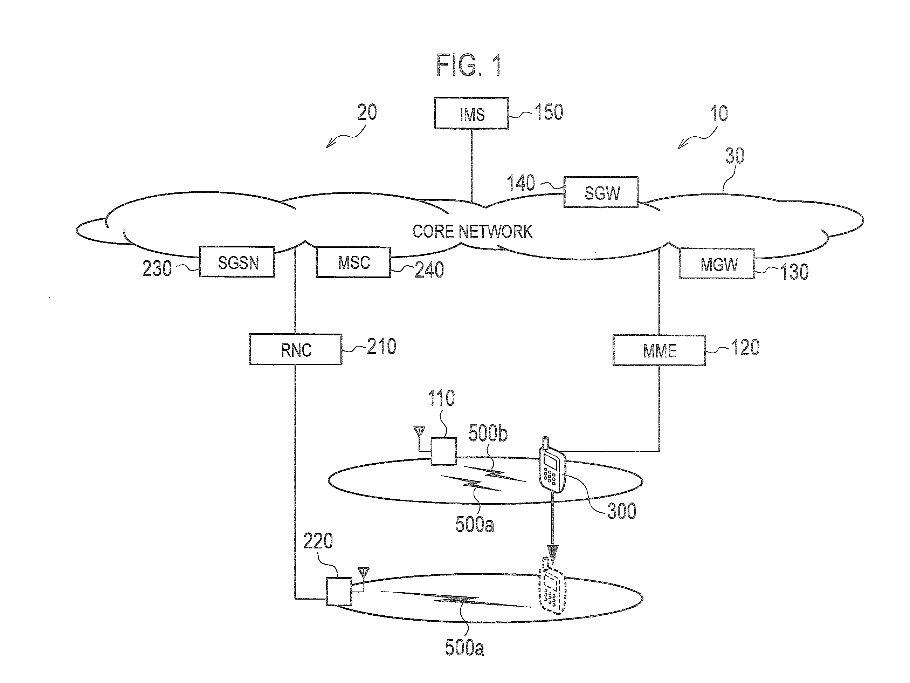

Fig. 1 is an overall schematic configuration diagram of a radio communication system according to the present embodiment. As shown in Fig. 1, a radio communication system according to the embodiment includes an LTE system 10 and a 3G system 20.

The LTE system 10 (a first radio communication system) is a radio communication system conforming to the LTE scheme. The 3G system 20 (a second radio communication system) is a radio communication system conforming to the 3G scheme (W-CDMA) . In other words, the LTE system 10 and the 3G system 20 use different radio access technologies (RAT).

Specifically, the LTE system 10 includes a PS (Packet Switching) domain. On the other hand, the 3G system 20 includes a PS domain and a CS (Circuit Switching) domain.

The LTE system 10 includes an eNodeB 110 (a base station), an MME 120 (Mobility Management Entity), an MGW 130 (Media Gateway) and an SGW (Signaling Gateway). The MGW 130 executes media conversion between the PS domain (an IP network) and the CS domain (a circuit switching network). In addition, the SGW 140 transmits a signal of the circuit switching network on the IP.

The 3G system 20 includes a RNC 210, a NodeB 220 (a base station), an SGSN 230 (Serving GPRS Support Node) and an MSC 240 (Mobile-services Switching Center). The SGSN 230 is a packet access control node to transfer user traffic. The MSC 240 executes call control of voice call and the like.

Respective devices configuring the LTE system and the 3G system are connected so as to be capable of communicating with each other via a core network 30. In addition, an IMS 150 (IP Multimedia Subsystem) is connected to the core network 30. The IMS 150 provides a real-time application such as voice on the IP network.

The UE 300 (a mobile device) can be connected to the LTE system 10 and the 3G system by radio. Specifically, the UE 300 executes radio communications with the eNodeB 110 and is connected with the LTE system 10. Moreover, the UE 300 executes radio communications with the NodeB 220 and is connected with the 3G system 20.

The UE 300 establishes a plurality of radio access bearers (RAB) with the LTE system and executes the radio communications using the RAB. For example, the UE 300 can establish RAB 500a and RAB 500b with the LTE system 10. The RAB 500a is a VoIP bearer which is used for processing voice call and the RAB 500b is a bearer which is used for processing other than the voice call.

In other words, the UE 300 can be connected to the LTE system 10 and the 3G system 20 and can execute a handover (Inter-RAT Handover) between the LTE system 10 and the 3G system 20.

### (2) Functional Block Configuration of Radio Communication System

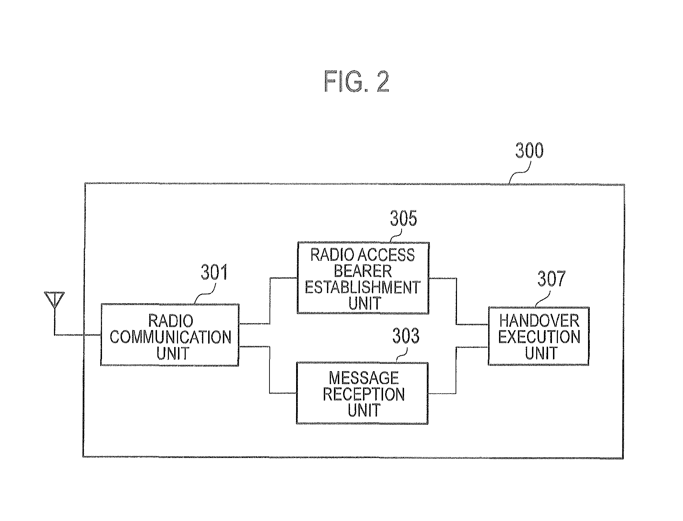

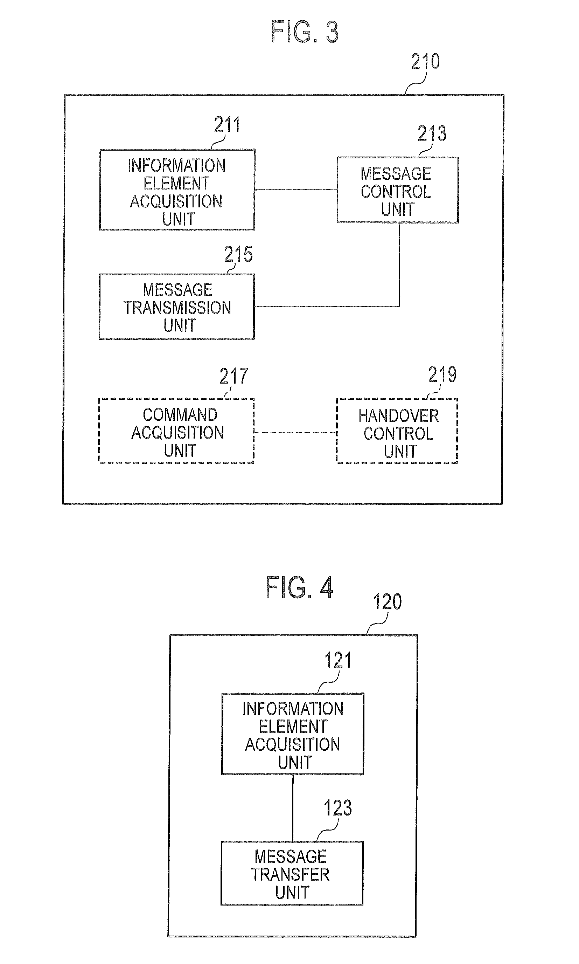

Hereinafter, functional block configurations of major devices among the devices configuring the radio communication systems are described. Fig. 2 is a functional block configuration diagram of the UE 300. Fig. 3 is a functional block configuration diagram of the RNC 210. Fig. 4 is a functional block configuration diagram of the MME 120.

### (2.1) UE 300

As shown in Fig. 2, the UE 300 includes a radio communication unit 301, a message reception unit 303, a radio access bearer establishment unit 305, and a handover execution unit 307.

The radio communication unit 301 executes radio communications with the eNodeB 110 of the LTE system 10 or the NodeB 220 of the 3G system 20.

The message reception unit 303 receives a predetermined message from the LTE system 10 when the handover of the UE 300 from the LTE system 10 to the 3G system 20 is executed.

Specifically, when the UE 300 executes a handover from the LTE system 10 to the 3G system 20, the message reception unit 303 receives a command that RAB 500a, RAB 500b established between the UE 300 and the LTE system 10 be relocated at the 3G system 20 or a command to replace the configurations of the RAB 500a, RAB 500b. In the embodiment, the message reception unit 303 serves as a command reception unit.

For example, for the RAB 500a being a VoIP bearer, a command to replace the RAB 500a with a circuit switching (CS) bearer is transmitted from the LTE system 10. Also, for the RAB 500b, a command to relocate the RAB 500b at the 3G system 20 is transmitted from the LTE system 10.

The radio access bearer establishment unit 305 establishes a RAB with the LTE system 10 or the 3G system 20. In particular, if a RAB (undesignated radio access bearer) not designated in the relocation command or the replacement command received by the message reception unit 303 is established, the radio access bearer establishment unit 305 releases the RAB.

In other words, for the RAB not targeted by either the relocation command or the replacement command, the radio access bearer establishment unit 305 executes processing to exclude the radio access bearer from the handover target when the handover from the LTE system 10 to the 3G system 20 is executed.

The handover execution unit 307 instructs the radio access bearer establishment unit 305 to establish a RAB and executes a handover from the LTE system 10 to the 3G system 20 using the establish RAB based on the RAB relocation command or RAB configuration replacement command received by the message reception unit 303.

### (2.2) RNC 210

The RNC 210 serves as a communication controller which controls the UE 300. As shown in Fig. 3, the RNC 210 includes an information element acquisition unit 211, a message control unit 213, and a message transmission unit 215.

The information element acquisition unit 211 acquires an information element (IE) which is needed for controlling the handover of the UE 300 from the device configuring the LTE system 10 or the 3G system 20.

Specifically, the information element acquisition unit 211 acquires an information element indicating that the UE 300 has an ability of releasing a RAB (an undesignated radio access bearer) not designated in the command to relocate the RAB established between the UE 300 and the LTE system 10 at the 3G system 20 or the RAB configuration replacement command when the UE 300 executes the handover from the LTE system 10 to the 3G system 20 in a case where the RAB is established.

The message control unit 213 controls transmission of a predetermined message to the UE 300. Specifically, the message control unit 213 transmits a release command to release a RAB (an undesignated radio access bearer) not designated in the command to relocate the RAB at the 3G system 20 or the RAB configuration replacement command to the UE 300 via the message transmission unit 215.

In addition, the message control unit 213 cancels transmission of the release command to instruct the release of the RAB, i.e., the undesignated radio access bearer to the UE 300 when the information element acquisition unit 211 acquires the information element indicating that the UE 300 has an ability of releasing the RAB.

The message transmission unit 215 transmits a predetermined message such as a release command to the UE 300 based on the control performed by the message control unit 213.

### (2.3) MME 120

The MME 120 serves as a communication controller which controls the mobile device. As shown in Fig. 4, the MME 120 includes an information element acquisition unit 121 and a message transfer unit 123.

The information element acquisition unit 121 acquires an information element (IE) needed for controlling the handover of the UE 300 from the device configuring the LTE system 10 or the 3G system 20. The information element acquisition unit 121 includes a function similar to that of the information element acquisition unit 211 of the above-described RNC 210.

Specifically, the information element acquisition unit 121 acquires an information element indicating that the UE 300 has an ability of, when the UE 300 executes the handover from the LTE system 10 to the 3G system 20, releasing a RAB (an undesignated radio access bearer) not designated in the command to relocate the RAB established between the UE 300 and the LTE system 10 at the 3G system 20 or the RAB configuration replacement command if the RAB is established with the LTE system 10.

The message transfer unit 123 transfers the predetermined message acquired by the information element acquisition unit 121 to another communication controller within the LTE system 10 or the 3G system 20. Specifically, the message transfer unit 123 transfers the information element acquired by the information element acquisition unit 121 to another communication controller (RNC 210) responsible for determining whether to cancel transmission of a release command to instruct the release of the undesignated access bearer.

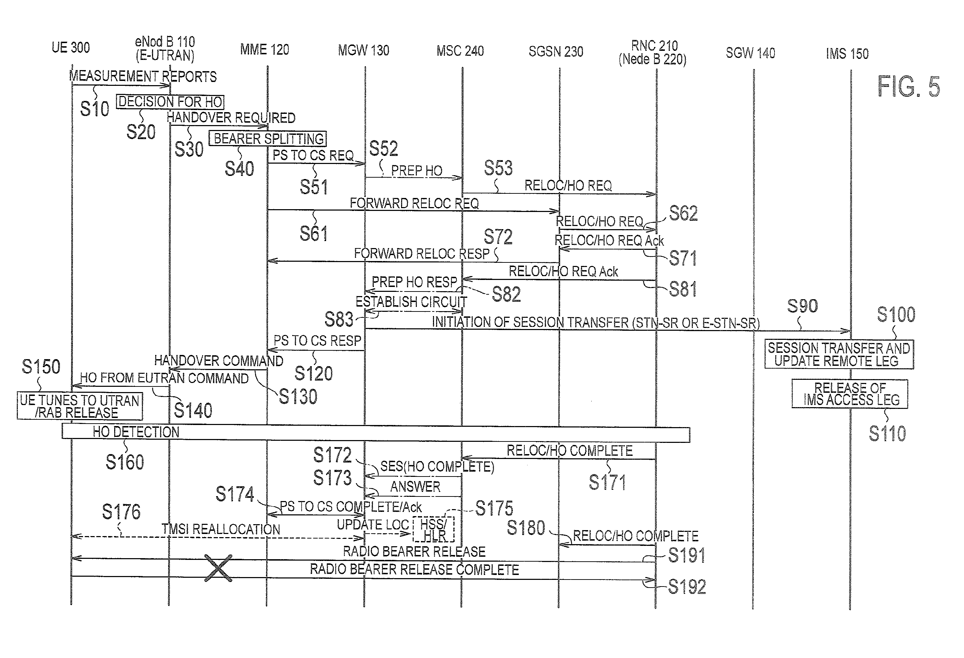

### (3) Operation of Radio Communication System Hereinafter, referring to Fig. 5, an operation of the above-described radio communication system is described. Fig. 5 shows a communication sequence performed when the UE 300 executes a handover from the LTE system 10 to the 3G system 20. In the example shown in Fig. 4, the UE executes the handover from the LTE system 10 to the 3G system 20 according to the Single Radio Voice Call Continuity (SR-VCC) procedure. In addition, it is assumed that the UE 300 establishes the RAB 500a being a VoIP bearer for voice call and the RAB 500b for other communications with the LTE system 10 (eNodeB 110).

The eNodeB 110 determines execution of the handover of the UE 300 from the LTE system 10 to the 3G system 20 based on a report of a radio quality measurement result in the UE 300 (steps S10 to S40).

The MME 120 sets SR-VCC (a replacement command) of replacing the RAB 500a with a CS bearer to be used for voice call in the 3G system 20 (steps S51 to S52 and steps S81 to S83).

In addition, the MME 120 sets Forward Reloc Req. (a relocation command) for the RAB 500b to be established as a PS bearer in the 3G system 20 (steps S61 and S62 and steps S71 and S72).

Here, if the establishment of the PS bearer fails due to some reason (e.g., a short of radio resources in the 3G system 20), the UE 300 autonomously releases the RAB 500b not designated in the relocation command (or the replacement command) even though receiving no release command from the LTE system 10 and the 3G system 20.

Specifically, the UE 300 releases RAB subflow for the RAB 500b and the PDCP entity and RLC entity for the RAB 500b. Also, the UE 300 deletes the information on the RAB 500b from "variable ESTABLISHED RAYS."

Note that the steps other than the foregoing steps are same as those of the conventional handover according to the SR-VCC procedure, and the description thereof is omitted.

In the conventional handover according to the SR-VCC procedure, at step S140, the conventional UE 300 does not release but holds the RAB 500b if only the SR-VCC is set in the RCC: HANDOVER TO UTRAN COMMAND. For this reason, the RNC 210 has to transmit RADIO BEARER RELEASE (a release command) for causing the UE 300 to release the RAB 500b (steps S191 and 5192).

In the embodiment, the RNC 210 does not have to transmit the RADIO BEARER RELEASE because the UE 300 autonomously releases a RAB not designated in the relocation command or the replacement command.

### (4) Advantageous Effects

According to the radio communication system according to the above-described embodiment, as described above, the UE 300 autonomously releases an undesignated radio access bearer (e.g., RAB 500b) not designated in the relocation command or the replacement command if the undesignated access bearer is established with the LTE system 10.

Accordingly, there is no need to additionally transmit RRC: RADIO BEARER RELEASE in order to release the undesignated radio access bearer, and thereby the radio resource usage can be saved. In addition, the UE 300 releases the undesignated radio access bearer without waiting for the RRC: RADIO BEARER RELEASE. Thus, the connection delay during the execution of the handover of the UE 300 can be reduced.

### (5) Other Embodiments

As described above, although the present invention has been disclosed through an embodiment of the invention, it should not be understood that the description and drawings which constitute one part of this disclosure limit the invention. Various alternative embodiments will be apparent for those who are in the art from this disclosure.

For example, the RNC 210 may include the following functions. Specifically, as shown by the dotted line in Fig. 3, the RNC 210 may include a command acquisition unit 217 and a handover control unit 219.

The command acquisition unit 217 acquires a command to relocate a RAB established between the UE 300 and the LTE system 10 at the 3G system 20 or a RAB configuration replacement command when the UE 300 executes the handover from the LTE system 10 to the 3G system 20.

The handover control unit 219 controls the handover of the UE 300. The handover control unit 219 sets an information element to instruct release of a RAB (an undesignated radio access bearer) not designated in the relocation command or the replacement command received by the command acquisition unit 217 if the RAB is established between the UE 300 and the LTE system 10. In addition, the handover control unit 219 establishes a RAB targeted by the relocation command or the replacement command between the UE 300 and the 3G system 20. Furthermore, the handover control unit 219 releases the undesignated radio access bearer using the set information element.

In other words, the undesignated radio access bearer may be released with an initiative of not the UE 300 but the RNC 210.

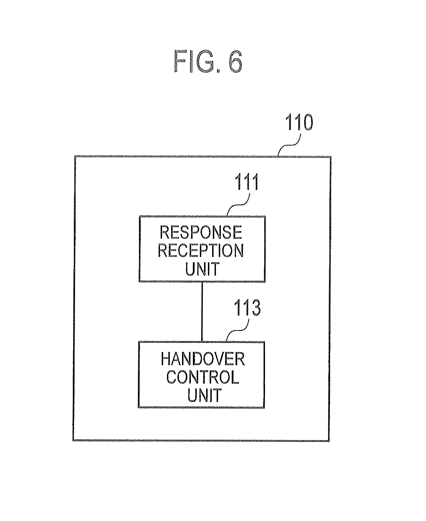

Also, the eNodeB 110 may include the following functions. Fig. 6 is a functional block configuration diagram of the eNodeB 110 according to the present modification of the invention. As shown in Fig. 6, the eNodeB 110 (a communication controller) includes a response reception unit 111 and a handover control unit 113.

The response reception unit 111 receives a response to the command to relocate a RAB established between the UE 300 and the LTE system 10 at the 3G system 20 or a RAB configuration replacement command when the UE 300 executes the handover from the LTE system 10 to the 3G system 20.

If the response reception unit 111 does not receive the response and if an undesignated radio access bearer not designated in the relocation command or the replacement command is established between the UE 300 and the LTE system 10, the handover control unit 113 transmits a radio signal instructing the release of the RAB.

In other words, the eNodeB 110 may directly transmit the radio signal instructing the release of the RAB to the UE 300 when the undesignated radio access bearer is established between the UE 300 and the LTE system 10.

In addition, in the above-described embodiments, the description is given by taking the LTE system 10 and the 3G system 20 as an example. However, the invention is also applicable to other radio communication systems (e.g. , 3G and GSM (registered trademark)).

In this manner, the present invention naturally includes various embodiments which are not described herein. Accordingly, the technical scope of the present invention is only defined by the invention specifying matters according to the scope of the invention which are relevant from the above description.

Note that the contents of Japanese Patent Application No. 2010-249079 (filed on November 5, 2010) are entirely incorporated herein by reference.

### INDUSTRIAL APPLICABILITY

The features of the present invention can provide a mobile device, a communication controller, and a handover control method that are capable of achieving the saving of radio resource usage and a reduction in a connection delay during the execution of a handover between radio communication systems with different radio access technologies which are used by the mobile device.

### EXPLANATION OF THE REFERENCE NUMERALS

10... LTE system
20... 3G system
30... core network
110... eNodeB
111... response reception unit
113... handover control unit
120... MME
121... information element acquisition unit
123... message transfer unit
130... MGW
140... SGW
150... IMS
210... RNC
211... information element acquisition unit
213... message control unit
215... message transmission unit
217... command acquisition unit
219... handover control unit
220... NodeB
230... SGSN
240... MSC
300... UE
301... radio communication unit
303... message reception unit
305... radio access bearer establishment unit
307... handover execution unit
500a, 500b... RAB

## Claims

1. A mobile device connectable to a first radio communication system and a second radio communication system different from the first radio communication system, the mobile device comprising:
a command reception unit configured to receive a command that a radio access bearer established between the mobile device and the first radio communication system be relocated at the second radio communication system or a command to replace a configuration of the radio access bearer when the mobile device executes a handover from the first radio communication system to the second radio communication system; and
a radio access bearer establishment unit configured to release an undesignated radio access bearer not designated in the relocation command or the replacement command received by the command reception unit if the undesignated radio access bearer is established.

2. The mobile device according to claim 1, wherein the radio access bearer establishment unit notifies at least one of the first radio communication system and the second radio communication system of an information element indicating the mobile device has an ability of releasing the undesignated radio access bearer.

3. A communication controller to control a mobile device connectable to a first radio communication system and a second radio communication system different from the first radio communication system, the communication controller comprising:
an acquisition unit configured to acquire an information element indicating that the mobile device has an ability of releasing an undesignated radio access bearer not designated in a command that a radio access bearer established between the mobile device and the first radio communication system be relocated at the second radio communication system or a command to replace a configuration of the radio access bearer, if the undesignated radio access bearer is established in the mobile device, when the mobile device executes a handover from the first radio communication system to the second radio communication system; and
a message control unit configured to cancel transmission of a release command to instruct a release of the undesignated access bearer to the mobile device, if the information element is acquired by the acquisition unit.

4. A communication controller controlling a mobile device connectable to a first radio communication system and a second radio communication system different from the first radio communication system, the communication controller comprising:
an acquisition unit configured to acquire an information element indicating that the mobile device has an ability of releasing an undesignated radio access bearer not designated in a command that a radio access bearer established between the mobile device and the first radio communication system be relocated at the second radio communication system or a command to replace a configuration of the radio access bearer, if the undesignated radio access bearer is established in the mobile device, when the mobile device executes a handover from the first radio communication system to the second radio communication system; and
a message transfer unit configured to transfer the information element acquired by the acquisition unit to another communication controller responsible for determining whether or not to cancel transmission of a release command to instruct the release of the undesignated access bearer.

5. A communication controller including a handover control unit to control a handover of a mobile device connectable to a first radio communication system and a second radio communication system different from the first radio communication system, the communication controller comprising:
a command acquisition unit configured to acquire a command that a radio access bearer established between the mobile device and the first radio communication system be relocated at the second radio communication system or a command to replace a configuration of the radio access bearer when the mobile device executes a handover from the first radio communication system to the second radio communication system, wherein
if an undesignated radio access bearer not designated in the relocation command or the replacement command received by the command acquisition unit is established in the mobile device, the handover control unit sets an information element instructing a release of the undesignated radio access bearer, establishes a radio access bearer targeted by the relocation command or the replacement command between the mobile device and the second radio communication system, and releases the undesignated radio access bearer by using the set information element.

6. A communication controller including a handover control unit to control a handover of a mobile device connectable to a first radio communication system and a second radio communication system different from the first radio communication system, the communication controller comprising:
a response reception unit configured to receive, from the mobile device, a response to a command that a radio access bearer established between the mobile device and the first radio communication system be relocated at the second radio communication system or a command to replace a configuration of the radio access bearer when the mobile device executes a handover from the first radio communication system to the second radio communication system, wherein
if the response reception unit does not receive the response and if an undesignated radio access bearer not designated in the relocation command or the replacement command is established in the mobile device, the handover control unit transmits a radio signal instructing a release of the undesignated radio access bearer.

7. A method of controlling a handover of a mobile device connectable to a first radio communication system and a second radio communication system different from the first radio communication system, the method comprising the steps of:
receiving a command that a radio access bearer established between the mobile device and the first radio communication system be relocated at the second radio communication system or a command to replace a configuration of the radio access bearer when the mobile device executes a handover from the first radio communication system to the second radio communication system; and
releasing an undesignated radio access bearer not designated in the received relocation command or the replacement command if the undesignated radio access bearer is established.
